# EUROPEAN PATENT SPECIFICATION

(11) **EP 3 885 244 B1**
(45) Date of publication and mention of the grant of the patent: **28.12.2022**
(21) Application number: 18855149.3
(22) Date of filing: 19.11.2018
(51) Int. Cl.: B63B 1/06, B63B 1/40

(54) **PROW AND/OR STERN ARRANGEMENT FOR REDUCING THE DRAG OF A WATERCRAFT DURING SAILING**
BUG- UND/ODER HECK-ANORDNUNG ZUR REDUZIERUNG DES WIDERSTANDS EINES WASSERFAHRZEUGS WÄHREND DER FAHRT
DISPOSITIF DE PROUE ET/OU DE POUPE POUR DIMINUER LA RÉSISTANCE À L'AVANCÉE D'UNE EMBARCATION PENDANT SA NAVIGATION

(43) Date of publication of application: 29.09.2021
(73) Proprietor: Arcusin, Carlos Eduardo, C.A. de Buenos Aires, Buenos Aires, 1429 (AR); Ganzabal Liberati, Alejandro Roman, San Fernando, Buenos Aires, 1646 (AR)
(72) Inventor: ARCUSIN, Carlos Eduardo, Buenos Aires, 1429 (AR)
(74) Representative: Durán-Corretjer, S.L.P.
(86) International application number: PCT/ES2018/070744
(87) International publication number: WO 2020/104706

(56) References cited:
- ES-A6- 2 003 623
- GB-A- 2 426 488
- US-A- 1 364 470
- US-A- 3 981 260
- US-A- 4 070 982

## Description

The present invention relates to a bow and/or a stern arrangement to decrease the resistance to the advance of a vessel during its navigation.

By means of the present arrangement, the resistance to the advance, constituted by the frictional resistance or viscose drag, and by the pressure resistance, also called residual resistance or resistance to wave formation, is diminished, achieving either the decrease of the consumption of the vessel, or the increase of the forward speed of the vessel to a constant consumption.

### PRIOR ART

Document US2009/0266288A1 discloses a method to reduce the frictional resistance between the body of a vessel and the water by emitting gases in the water, by supplying a plurality of gas outlets disposed at predetermined positions under water level in the front or bow of a ship's hull, pushing the hull upwards and thus decreasing the average density of water in surface contact with the hull.

Document JP2001-114185 discloses a method to reduce the pressure in the hull of a ship by very fine slits formed along the direction of seawater flow on the surface of the external plating of a ship, which was subjected to an anti-collision treatment, which reduces the resistance of the hull and prevents the adhesion of marine organisms.

Document JP4959667 discloses a device for reducing the frictional resistance in a ship's hull capable of emitting even air jets that generate bubbles from a plurality of holes formed in the lower part of the ship in which there is an air chamber.

Document EP0926060A3 discloses a method to reduce the frictional resistance of a ship with respect to water by generating bubbles by injecting gas into the water from selected locations that are spaced along the longitudinal direction by specific distances.

Document JP2009-248611 discloses a device for reducing the frictional resistance of a ship with respect to water capable of adequately changing the place of the production of bubbles and the number thereof according to the state of navigation of the ship or the state thereof, effectively reducing the frictional resistance by the precise blowing of bubbles even when turbulence occurs.

Document JP2010-280342 discloses a device for generating fine bubbles in a hull to reduce the frictional resistance of the fluid by forming thick layers of water that include fine bubbles on the submerged surface of the hull. It uses a pump capable of mixing a large amount of air in the suctioned water.

Document JP60-139586 discloses a bubble generator for reducing the frictional resistance, interconnected to a casing installed in the front hull of the lower plating of a ship.

Document JP62-268793 discloses a device for reducing the frictional resistance by the provision of air blowing means arranged in three layers respectively on both sides of the bow bulb where the dynamic pressure becomes negative.

Document US2764954 discloses an apparatus for the propulsion of ships by using an air jet stream interspersed with water to produce a reactive tensile force to propel the ship, substantially reducing the frictional resistance.

Document US5575232 discloses a method and a device for reducing the frictional resistance in a ship by generating micro bubbles.

Document US3875885 discloses a gas injection system for marine vehicles in which a primary gas injector creates an axial gas flow below the hull of the vessel, a primary aerator is provided below the hull of the vessel to generate an aerated flow of water and a second aerator, to further refine the aerated flow, which includes an inclined surface to give the main propulsive effect.

Document US6789491B2 discloses a method to reduce the frictional resistance of a ship between the external plating of the hull and the water by injecting air and thus generating microbubbles on the surface of said plating, below the waterline in the bow bulb.

Document US6186085B1 discloses a method to reduce the frictional resistance of a ship's hull by injecting microbubbles of predetermined diameter into the water from a position adjacent to the starting point of the water stream line and from the position where the static pressure is low, and the microbubbles are distributed in at least part of the circumferential area of the submerged portion of the hull, thus reducing the frictional resistance thereof while sailing.

Document US1364470A discloses a high speed boat having a hull provided with rollers to reduce the friction with the water.

Document US3981260A discloses a bow seal for a surface effect ship, wherein said ship is at least partially supported by a cushion of pressurized gas formed and contained between the vehicle body and the surface water and wherein a roller is provided at the aft end of the keel with the function being the reduction of drag of the bow and stern seals.

Document US4070982A discloses a displacement hull vessel with a water duct extending along its bottom and which is only partially below the water line during operation, wherein a reaction device imparts propulsion forces to the vessel. In one embodiment the reaction device is a rotatably-driven cylinder oriented with its axis horizontal and perpendicular to the direction of vessel motion.

Document GB2426488A discloses a marine craft which incorporates a pressurized air pocket within the underside of the hull to increase buoyancy and by this means reduce the wetted hull area, thereby minimizing skin friction losses when under-way.

Finally, document EP0265382A1 of the same Applicant, discloses flotation wheels that allow the displacement of aquatic vehicles or the like, the wheels having a spherical conformation with multiple blades that are fixed with free rotation to a axis connected to the hull of a ship, thus facilitating the movement thereof.

All the objects of the prior art discussed above have many disadvantages, among which we can mention that they are not efficient and require a lot of energy to reduce the frictional resistance of a vessel while sailing. Even in many cases, the decrease in the frictional resistance is minimal considering the energy consumed for this purpose, not to mention the complexity of the devices to cause this effect.

This has led the Applicant to develop a novel arrangement of at least one rotating body of revolution located in the bow and/or the stern of a vessel, with rotation synchronized with the forward speed of said vessel, its longitudinal rotation axis being arranged perpendicular to the forward direction of the vessel. For the present application, said rotating body of revolution is a cylinder and in the case of twc or more bodies of revolution, they are preferably of identical geometry and identical dimensions. However, any technician skilled in the art will be able to adapt the shape and the dimensions of said rotating body of revolution to the needs required by any other type of embodiment. The longitudinal rotation axis of said at least one cylinder is attached to the vessel by support and draft control means. Said support means are forks. To said at least one cylinder is given a rotary impulse using engines, which are associated to said longitudinal axis of said at least one cylinder by transmission means such as belts, straps, chains, or the like. In order to achieve an optimum effect in terms of reducing the resistance during the advance of the vessel, the Applicant has discovered that the draft of said at least one cylinder must be of the order of 30% of its diameter. In order to ensure that said draft is maintained, said means for controlling the draft, which are pistons, are provided. Furthermore, it has been found that the rotating cylinder closest to the hull of said vessel, to achieve an optimum reduction of the opposite resistance offered by the water, must be separated from said hull of said vessel by a clearance of approximately 5% or less of its diameter.

A first variant embodiment of the above is to have a single rotating cylinder that meets the above features, located in the bow and/or the stern of the vessel.

A second variant embodiment is to have two or more rotating cylinders mounted on support means located in the bow and/or the stern of a vessel, wherein the rotating cylinder closest to the hull of said vessel is separated from said hull of said vessel by a distance of about 5% or less of its diameter, said two or more rotating cylinders having a synchronized rotation with the forward speed of said vessel, being separated from each other by a distance of approximately 5% or less of its diameter, drafting in the order of 30% of its diameter, and being attached to driving means. The longitudinal rotation axes of said rotating cylinders are arranged perpendicular to the direction of advance of the vessel. Said driving means can be a single engine attached to said two or more rotating cylinders, or individual engines for each of the cylinders, the engine(s) being associated to said longitudinal axes of said rotating cylinders also by transmission means such as for example, belts, straps, chains or the like.

As in the case of a single cylinder, in order to achieve an optimum result of reduction in the resistance to the advance, the level of flotation of said rotating cylinders must be kept constant with a draft of the order of 30% of its diameter, for which draft control means are attached to said support means. Said draft control means may be pistons or the like.

### DRAFT

During the research stage, after numerous tests simulated by the CFD system with OpenFoam, the Applicant has verified, as previously mentioned, that the ideal draft of a cylinder is of the order of 30% of its diameter, since said cylinder rotating at a speed synchronized with the forward speed of the assembly compared with the same body without rotation, with said draft, can get a reduction in the resistance to the advance of up to 50% of the overall resistance, and this reduction being only 5% when the draft is 50% of the diameter.

| Draft [% of diameter] | Forward Speed [m/sec] | Rotation Speed [m/sec] | Pressure Resistance [N] | Frictional Resistance [N] | Overall Resistance [N] | Rotation Torque [N.m] |
|---|---|---|---|---|---|---|
| 30 | 1.0 | 0.0 | 20.297 | 1.3593 | 21.656 | 0.4741 |
| 30 | 1.0 | 1.0 | 12.621 | 0.1405 | 12.762 | -0.0513 |
| 50 | 1.0 | 0.0 | 46.123 | 0.6095 | 46.733 | 0.2600 |
| 50 | 1.0 | 1.0 | 44.486 | -0.1380 | 44.348 | -0.1970 |

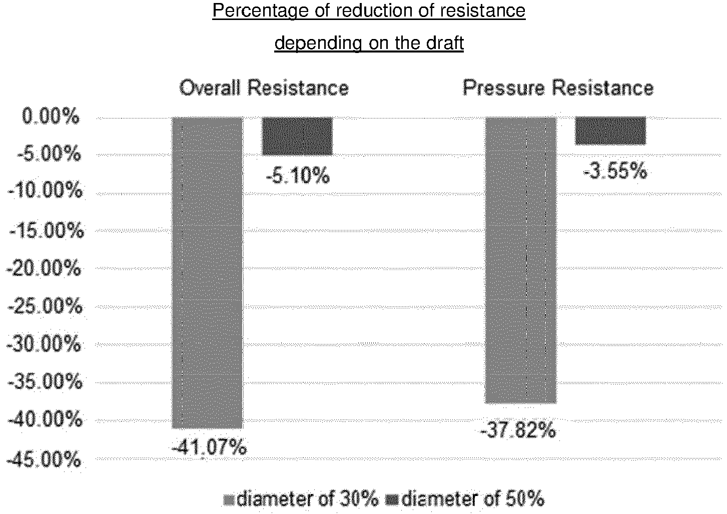

### SPACING BETWEEN TWO OR MORE CYLINDERS

As previously mentioned, the Applicant has verified that the optimum distance between two or more cylinders is obtained when the bodies approach approximately 5% or less of their diameter causing a very significant hydrodynamic effect of interaction, which disappears when the rotating bodies move away.

### THRUST OF THE FRONT CYLINDER OF A STRUCTURE OF TWO OR MORE CYLINDERS IN THE BOW

With the optimum separation of around 5% or less and an optimum draft of the order of 30% of the diameter of the rotating cylinders, the Applicant has verified that the front cylinder in a structure of two or more cylinders in the bow, not only contributes to the decrease in the resistance to the advance of a vessel, but it provides energy to the system, which is understood as thrust.

This phenomenon is achieved by the effect of an overpressure in said rotating cylinder and the increase in the speed of the water flow across the submerged profile of the cylinder. Since the cylinder is only partially submerged and already in roto-translatory movement, the submerged section gets a pressure offered by a medium approximately 1000 times denser than the air in contact with the section outside the water. Said pressure difference brings a thrust coincident with the direction of advance of the assembly to the roto-translatory movement.

According to the results obtained from testing, a cylinder of 6m diameter or length, with a draft of 2m depth and 12m length or beam, at the synchronized speed of 3.162m/sec (both rotation and forward speed) provides a thrust equivalent to 73.14HP to the system.

### SYNCHRONIZED ROTATION OF THREE CYLINDERS. AND OVER-ROTATION FROM THE FRONT CYLINDER TO THE REAR CYLINDER IN A STRUCTURE MOUNTED IN THE BOW

The Applicant has evaluated different percentages of rotation speed in relation to the forward speed of the assembly, observing a continuous decrease in the resistance when generating an over-rotation in said cylinders, as can be seen in the figure below.
S-translation = S5 = 0.8 m/sec
Variation of Overall Resistance
Calculated with the Rotation Speed

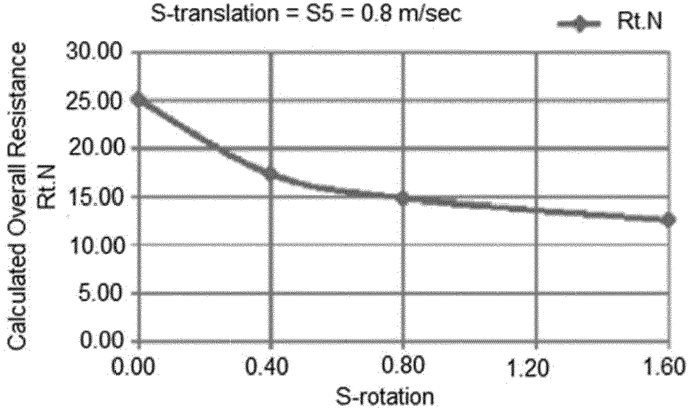

When analyzing an assembly of 3 rotating cylinders with synchronized rotation, the variation of the rotation speed or over-rotation was also discussed in an incremental way from the front cylinder to the rear cylinder, obtaining the following results:
A) Three cylinders, synchronized rotation at the speed of 1m/sec, the reduction obtained was 43% of the overall resistance to the advance of the assembly;
B) Three cylinders, synchronized front cylinder, synchronized intermediate cylinder and rear cylinder rotating at twice the synchronized speed, the reduction obtained was 52% of the overall resistance to the advance of the assembly;
C) Three cylinders, synchronized front cylinder, intermediate cylinder rotating at 1.5 times the synchronized speed and rear cylinder rotating at twice the synchronized speed, the reduction obtained was 56% of the overall resistance to the advance of the assembly.

| Front Cylinder | | | | | | | |
|---|---|---|---|---|---|---|---|
| Front - Intermediate - Rear | Pressure Resistance [N] | Frictional Resistance [N] | Overall Resistance [N] | Rotation Torque [N.m] | EP [W] | RP [W] | Total Power [W] |
| V00-V00-V00 | 42.00 | 1.29 | 43.29 | 0.44 | 43.3 | 0.0 | 43.3 |
| V10-V10-V10 | -29.23 | -0.10 | -29.33 | -0.21 | -29.3 | 0.7 | -28.7 |
| V10-V10-V20 | -29.90 | -0.09 | -29.98 | -0.21 | -30.0 | 0.7 | -29.3 |
| V10-V15-V20 | -29-55 | -0.08 | -29.63 | -0.21 | -29.6 | 0.7 | -29.0 |

| Intermediate Cylinder | | | | | | | |
|---|---|---|---|---|---|---|---|
| Front - Intermediate - Rear | Pressure Resistance [N] | Frictional Resistance [N] | Overall Resistance [N] | Rotation Torque [N.m] | EP [W] | RP [W] | Total Power [W] |
| V00-V00-V00 | 13.04 | 0.90 | 13.94 | 0.22 | 13.9 | 0.0 | 13.9 |
| V10-V10-V10 | 17.22 | -0.59 | 16.63 | -0.40 | 16.6 | 1.3 | 17.9 |
| V10-V10-V20 | 13.05 | -0.60 | 12.45 | -0.42 | 12.4 | 1.3 | 13.8 |
| V10-V15-V20 | 6.28 | -1.37 | 4.91 | -1.60 | 4.9 | 7.5 | 12.5 |

| Rear Cylinder | | | | | | | |
|---|---|---|---|---|---|---|---|
| Front - Intermediate - Rear | Pressure Resistance [N] | Frictional Resistance [N] | Overall Resistance [N] | Rotation Torque [N.m] | EP [W] | RP [W] | Total Power [W] |
| V00-V00-V00 | 29.04 | 1.36 | 30.39 | 0.40 | 30.4 | 0.0 | 30.4 |
| V10-V10-V10 | 62.91 | -0.48 | 62.43 | -0.32 | 62.4 | 1.0 | 63.4 |
| V10-V10-V20 | 60.32 | -1.39 | 58.94 | -3.02 | 58.9 | 19.0 | 77.9 |
| V10-V15-V20 | 64.38 | -1.18 | 63.20 | -2.93 | 63.2 | 18.4 | 81.6 |

| | | | | | | | |
|---|---|---|---|---|---|---|---|
| V00 = no rotation V10 = Synchronized Rotation Speed = 1 m/sec V15 = 1.5 times the Synchronized Rotation Speed V20 = twice the Synchronized Rotation Speed TEP = Effective Power = Overall Resistance x Forward Speed RP = Rotation Power RP = Rotation Torque x Angular Rotation Speed | | | | | | | |

| 3-Cylinder Assembly | | | | | | | |
|---|---|---|---|---|---|---|---|
| Front - Intermediate - Rear | Pressure Resistance [N] | Frictional Resistance [N] | Overall Resistance [N] | Rotation Torque [N.m] | EP [W] | RP [W] | Total Power [W] |
| V00-V00-V00 | 84.07 | 3.54 | 87.61 | 1.06 | 87.61 | 0.00 | 87.61 |
| V10-V10-V10 | 50.90 | -1.17 | 49.73 | -0.93 | 49.73 | 2.95 | 52.68 |
| V10-V10-V20 | 43.47 | -2.07 | 41.41 | -3.65 | 41.41 | 20.96 | 62.37 |
| V10-V15-V20 | 41.11 | -2.63 | 38.49 | -4.74 | 38.49 | 26.58 | 65.06 |

| | | | | | | | |
|---|---|---|---|---|---|---|---|
| V00 = no rotation V10 = Synchronized Rotation Speed = 1 m/sec V15 = 1.5 times the Synchronized Rotation Speed V20 = twice the Synchronized Rotation Speed TEP = Effective Power = Overall Resistance x Forward Speed RP = Rotation Power RP = Rotation Torque x Angular Rotation Speed | | | | | | | |

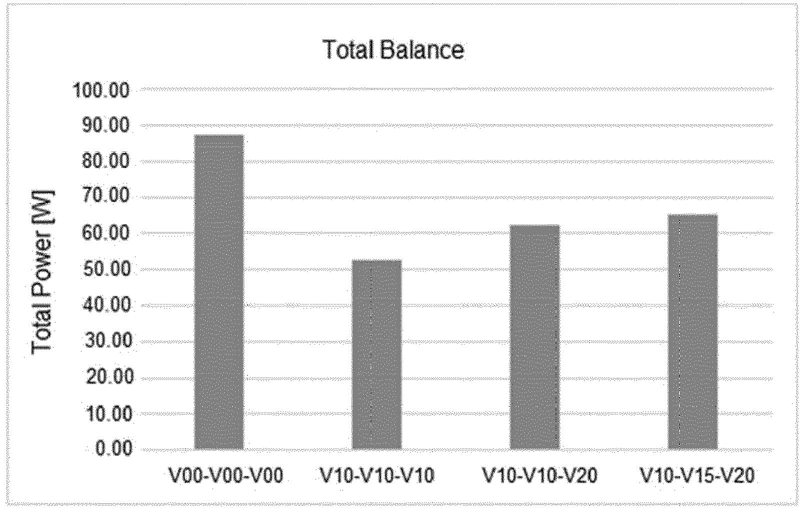

As can be noted, the over-rotation has a significant impact in the reduction of the overall resistance. Although from the point of view of the energy balance, the optimal choice is that of synchronized rotation at the same forward speed of the vessel, from the point of view of the need to achieve an increase in speed of the vessel, the other options are very valid.

Different configurations were tested:
A) All cylinders rotating synchronously;
B) Only the front cylinder rotating synchronously;
C) Only the rear cylinder rotating synchronously; and
D) All cylinders without rotation.

It has been observed that the greatest decrease, and even the thrust in all cases, is always provided by the front cylinder.

However, when the rear cylinder was analyzed while rotating only, and even in the case of over-rotation, said rear cylinder brings a reduction of the overall resistance of the assembly of the order of 5%.

That is why the Applicant understands that one of the applications that will bring more benefits to the maritime industry in general is the installation of structures mounted on the bow that include one or more cylinders in existing maritime transports and those that will be built in the future.

As expected, the benefit of the rotation is progressively related to the scale used. That is why each vessel that applies this method of reduction of resistance in its bow and/or the stern, should test the best scale option for each configuration.

Another feature of the invention is that both in the case of a single rotating cylinder and two or more rotating cylinders, they can act as tanks that allow to load fluids or grains, thus harnessing the volume and improving the cost per transported ton ratio.

The rotating cylinders do not have any type of wings or blades, their surface being as smooth as possible.

The effect of decreasing the resistance to the advance is much greater than the resistance generated by the cylinders in the water, since the pressure resistance is modified, also called residual resistance or resistance to wave formation. The pressure resistance is the cause of about 90% of the overall resistance of a vessel and increases exponentially depending on the speed.

Furthermore, fluvial and maritime transportation costs include both fuel consumption and all costs related to transport time, such as daily rental and crew hiring; that is why with this arrangement, either the reduction of consumption of the vessel or the increase in the forward speed of the vessel at a constant consumption is sought. This results in less polluting and more economic vessels, or vessels with shorter cycle times with their respective savings as long as logistics is concerned.

This generates a highly efficient ratio of energy consumed per ton of load transported and, in addition, a highly stable design.

Therefore, the object of the present invention is an arrangement for decreasing the resistance to the advance of a vessel during its navigation, characterized in that it comprises at least one rotating body of revolution synchronized with the forward speed of said vessel, said at least one body of rotating revolution attached to said vessel by means of support and draft control means associated with its longitudinal rotation axis which is arranged perpendicular to the direction of advance of said vessel, and associated with driving means, said at least one rotating body of revolution located in the bow and/or the stern of said vessel, wherein the rotating body of revolution closest to the hull of said vessel is separated from said hull of said vessel by a distance of approximately 5% or less than its maximum diameter.

It is also claimed an arrangement for decreasing the resistance to the advance of a vessel during its navigation, characterized in that it comprises:
a rotating body of revolution with a rotation synchronized with the forward speed of said vessel, said rotating body of revolution being attached to said vessel by support and draft control means associated with its longitudinal rotation axis which is arranged perpendicular to the direction of advance of said vessel, and associated with driving means, said rotating body of revolution being located in the bow and/or the stern of said vessel and separated from the hull of said vessel by a distance of approximately 5% or less of its maximum diameter.

Another object of the present invention is an arrangement for decreasing the resistance to the advance of a vessel during its navigation, characterized in that it comprises:
two or more rotating bodies of revolution with a rotation synchronized with the forward speed of a vessel mounted through its longitudinal rotation axes to support means located in the bow and/or in the stern of said vessel, wherein the rotating body of revolution closest to the hull of said vessel is separated from said hull of said vessel by a distance of approximately 5% or less of its maximum diameter, said two or more rotating bodies of revolution being separated from each other by a distance of about 5% of its maximum diameters, its longitudinal rotation axes being arranged perpendicular to the direction of advance of the vessel and associated with driving means, and said support means being attached to draft control means.

### BRIEF DESCRIPTION OF THE FIGURES

Figure 1 illustrates a side view of a first preferred example of embodiment, namely a rotating cylinder with a rotation synchronized with the forward speed of a vessel, submerged in the order of 30% of its diameter, and without submersion.
Figure 2 illustrates a side view of a second preferred example of embodiment, namely a plurality of rotating cylinders with a rotation synchronized with the forward speed of a vessel, submerged in the order of 30% of their diameter.

### DETAILED DESCRIPTION OF THE INVENTION

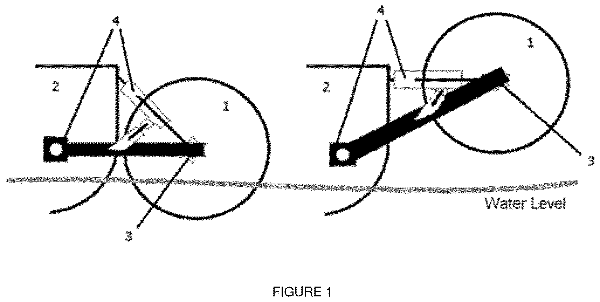

Figure 1, in its left part, illustrates a rotating cylinder 1 located in the bow of a vessel 2, although it could also be located in the stern, with a rotation synchronized with the forward speed of said vessel 2. Said rotating cylinder 1 is attached to said vessel 2 by support and draft control means 4 associated with its longitudinal rotation axis 3, which is arranged perpendicular to the direction of advance of said vessel 2 and associated with driving means (not shown). Said rotating cylinder 1 may be located in the bow and/or the stern of said vessel 2, and is separated from the hull of said vessel 2 by a distance of approximately 5% or less of its diameter.

Furthermore, said support means can be forks. Said draft control means regulate the level of flotation of said rotating cylinder 1, for example, by pistons or the like, so that said rotating cylinder 1 is submerged in the order of 30% of its diameter.

In turn, the right part of Figure 1 illustrates said rotating cylinder 1 without submersion or elevated by said support and draft control means 4.

Said rotating cylinder 1 is given a rotary impulse through said driving means (not shown), such as for example engines, said driving means being associated to said longitudinal rotation axis 3 of said rotating cylinder 1 by transmission means (not shown), such as belts, straps, chains or the like. In this way, the rotation of said rotating cylinder 1 synchronized with the forward speed of said vessel 2 is achieved. The surface of said rotating cylinder 1 is smooth. Said rotating cylinder 1 also has over-rotation capacity provided by said driving means (not shown).

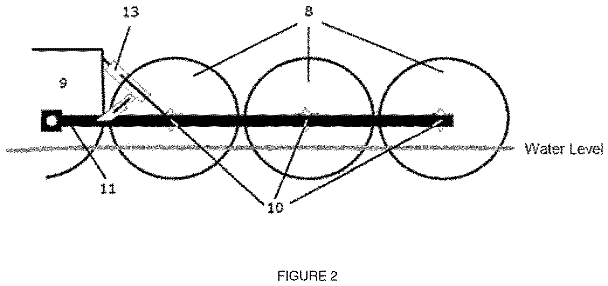

Figure 2 illustrates two or more rotating cylinders 8 mounted on support means 11 through their longitudinal rotation axes 10, said support means 11 being arranged in the bow of a vessel 9, although they could also be in the stern, where the rotating cylinder closest to the hull of said vessel 9 is separated from said hull of said vessel 9 by a distance of approximately 5% or less of its diameter. Said longitudinal rotation axes 10 are arranged perpendicular to the direction of advance of the vessel 9, and said support means 11 are associated with draft control means 13 that regulate the level of flotation of said two or more rotating cylinders 8 so that they are submerged in the order of 30% of their diameter. Said two or more rotating cylinders 8 are given a rotary impulse by means of driving means (not shown), such as for example an engine, or individual engines for each of the rotating cylinders 8, said driving means are associated to said longitudinal rotation axis 10 of said rotating cylinders 8 by transmission means (not shown), such as for example belts, straps, chains or the like.

Said support means 11 can be, for example, forks, and said draft control means 13 can be, for example, pistons. Again, the surfaces of said rotating cylinders 8 are smooth.

Also, said one rotating cylinder 1 or said two or more rotating cylinders 8, can carry load inside.

## Claims

1. An arrangement for reducing resistance to the advance of a vessel (2) during its navigation, comprising:
- at least one rotating body of revolution (1,8) attached to said vessel (2) by support and draft control means (4) associated with its longitudinal rotation axis (3) which is arranged perpendicular to the direction of advance of said vessel (2), and associated with driving means, said at least one rotating body of revolution (1,8) located in front of the bow or behind the stern of said vessel (2),
- the rotation of said at least one rotating body of revolution (1,8) is synchronized with the forward speed of said vessel (2), wherein the rotating body of revolution (1,8) closest to the hull of said vessel (2) is separated from said hull of said vessel (2) by a clearance of approximately 5% or less of its maximum diameter; **characterized in that**
- said support and draft control means (4) are forks associated with pistons and maintain said rotating body of revolution (1,8) submerged in the order of 30% of its maximum diameter during navigation;
- said driving means rotatably impel said rotating body of revolution (1,8), said driving means being engines, and being associated to said longitudinal rotation axis (3) of said at least one rotating body of revolution (1) by transmission means.

2. The arrangement according to claim 1, **characterized in that** said transmission means are belts, straps, chains or gears.

3. The arrangement according to claim 1, **characterized in that** the surface of said at least one rotating body of revolution (1,8) is smooth and its interior is hollow in order to have the capacity to carry load.

4. The arrangement according to claim 1, **characterized in that** said at least one rotating body of revolution (1,8) is a cylinder.

5. The arrangement according to claim 1, **characterized in that** it comprises two or more rotating bodies of revolution (1,8) being separated from each other by a clearance of approximately 5% or less of their maximum diameters.

6. A method for reducing resistance to the advance of a vessel (2) during its navigation by employing an arrangement of any one of the preceding claims, said method being **characterized in that** it comprises the following steps:
- rotating said at least one rotating body of revolution (1,8) in a synchronized way with the forward speed of said vessel;
- maintaining said at least one rotating body of revolution (1,8) submerged in the order of 30% of said maximum diameter during navigation; and
- maintaining said at least one rotating body of revolution (1,8) separated from the hull of said vessel (2) by a clearance of approximately 5% or less of its maximum diameter during navigation.

## Patentansprüche

1. Eine Anordnung zur Reduzierung des Fahrtwiderstands eines Wasserfahrzeugs (2) während der Fahrt, umfassend:
- wenigstens ein Rotationskörper (1,8) angebracht an dem genannten Wasserfahrzeug (2) durch Stütz- und Eintauchtiefekontrollmittel (4) verbunden mit seiner Längsdrehachse (3), die senkrecht zu der Fahrtrichtung von dem genannten Wasserfahrzeug (2) angeordnet ist, und verbunden mit Antriebsmittel, wobei der genannte wenigstens ein Rotationskörper (1,8) vor dem Bug oder hinter dem Heck von dem genannten Wasserfahrzeug (2) angeordnet ist,
- die Rotation von dem genannten wenigstens ein Rotationskörper (1,8) ist synchronisiert mit der Vorwärtsgeschwindigkeit von dem genannten Wasserfahrzeug (2), wobei der Rotationskörper (1,8), der dem Rumpf des genannten Wasserfahrzeugs (2) am nähesten ist, von dem genannten Rumpf des genannten Wasserfahrzeugs (2) durch einen Abstand von ca. 5% oder weniger des maximalen Durchmessers beabstandet ist; **gekennzeichnet dadurch, dass**
- die genannten Stütz- und Eintauchtiefekontrollmittel (4) sind Gabel verbunden mit Kolben, und halten den genannten Rotationskörper (1,8) unterhalb der Wasserlinie ca 30% seines maximalen Durchmessers während der Fahrt;
- die genannten Antriebsmittel treiben rotierend die genannten Rotationskörper (1,8) an, wobei die genannten Antriebsmittel Motoren sind, und sind verbunden mit der genannten Längsdrehachse (3) von dem genannten wenigstens ein Rotationskörper (1) durch Übertragunsmittel.

2. Die Anordnung gemäß Anspruch 1, **gekennzeichnet dadurch, dass** die genannten Übertragungsmittel Gurten, Riemen, Ketten oder Getriebe sind.

3. Die Anordnung gemäß Anspruch 1, **gekennzeichnet dadurch, dass** die Oberfläche von dem genannten wenigstens ein Rotationskörper (1,8) glatt ist, und seinen Innenraum hohl ist, um Lasten transportieren zu können.

4. Die Anordnung gemäß Anspruch 1, **gekennzeichnet dadurch, dass** der genannte wenigstens ein Rotationskörper (1,8) ein Zylinder ist.

5. Die Anordnung gemäß Anspruch 1, **gekennzeichnet dadurch, dass** sie zwei oder mehr Rotationskörper (1,8) umfaßt, die voneinander beabstandet sind durch einen Abstand von ca. 5% oder weniger von seinen maximalen Durchmessern.

6. Ein Verfahren zur Reduzierung des Fahrtwiderstandes eines Wasserfahrzeugs (2) während der Fahrt, das eine Anordnung gemäß einen von den vorstehenden Ansprüchen anwendet, das genannte Verfahren ist **gekennzeichnet dadurch, dass** es folgende Schritte umfaßt:
- Rotation von wenigstens ein Rotationskörper (1,8) synchronisiert mit der Vorwärtsgeschwindigkeit von dem genannten Wasserfahrzeug;
- Erhaltung des genannten wenigstens ein Rotationskörper (1,8) unterhalb der Wasserlinie ca. 30% von dem genannten maximalen Durchmesser während der Fahrt; und
- Erhaltung des genannten wenigstens ein Rotationskörper (1,8) beabstandet vom Rumpf von dem genannten Wasserfahrzeug (2) durch einen Abstand von ca. 5% oder weniger von seinem maximalen Durchmesser während der Fahrt.

## Revendications

1. Un dispositif visant à réduire la résistance à l'avancement d'un navire (2) pendant sa navigation, comprenant:
- au moins un corps rotatif de révolution (1,8) attaché audit navire (2) par des moyens de support et de contrôle du tirant d'eau (4) associé à son axe de rotation longitudinale (3) disposé perpendiculairement au sens d'avancement dudit navire (2), et associé à des moyens de transport, ledit au moins un corps rotatif de révolution (1,8) situé devant la proue ou derrière la poupe dudit navire (2),
- la rotation dudit au moins un corps rotatif de révolution (1,8) est synchronisée avec la vitesse d'avancement dudit navire (2), dans laquelle le corps rotatif de révolution (1,8) le plus proche de la coque dudit navire (2) est séparé de ladite coque dudit navire (2) par un dégagement d'environ 5% ou moins de son diamètre maximal; **caractérisé en ce que**
- lesdits moyens de support et de contrôle du tirant d'eau (4) sont des fourches associées à des pistons et maintiennent ledit corps rotatif de révolution (1,8) immergé de l'ordre de 30% de son diamètre maximum en navigation ;
- lesdits moyens d'entraînement rotatifs propulsant ledit corps tournant de révolution (1,8), lesdits moyens d'entraînement étant des moteurs, et étant associés audit axe de rotation longitudinale (3) dudit au moins un corps tournant de révolution (1) par des moyens de transmission.

2. Agencement selon la revendication 1, **caractérisé en ce que** lesdits moyens de transmission sont des courroies, des sangles, des chaînes ou des engrenages.

3. Agencement selon la revendication 1, **caractérisé en ce que** la surface dudit au moins un corps rotatif de révolution (1,8) est lisse et son intérieur est creux afin d'avoir la capacité de supporter une charge.

4. Agencement selon la revendication 1, **caractérisé en ce que** dit au moins un corps tournant de révolution (1,8) est un cylindre.

5. Agencement selon la revendication 1, **caractérisé en ce qu'**il comprend deux ou plusieurs corps tournants de révolution (1,8) séparés l'un de l'autre par un jeu d'environ 5% ou moins de leurs diamètres maximaux.

6. Méthode de réduction de la résistance à l'avancement d'un navire (2) au cours de sa navigation par l'emploi d'un dispositif de l'une quelconque des revendications précédentes, ladite méthode étant **caractérisée en ce qu'**elle comprend les étapes suivantes:
- faire tourner ledit au moins un corps en rotation de révolution (1,8) de manière synchronisée avec la vitesse vers l'avant dudit vaisseau ;
- maintenir ledit au moins un corps tournant de révolution (1,8) immergé d'environ 30% dudit diamètre maximum pendant la navigation; et
- maintenir ledit corps tournant au moins un corps tournant de révolution (1,8) séparé de la coque dudit navire (2) par un dégagement d'environ 5% ou moins de son diamètre maximal pendant la navigation.
